# EUROPÄISCHE PATENTSCHRIFT

(11) **EP 1 290 933 B1**
(45) Veröffentlichungstag und Bekanntmachung des Hinweises auf die Patenterteilung: **05.12.2007**
(21) Anmeldenummer: 02018619.3
(22) Anmeldetag: 20.08.2002
(51) Int. Cl.: A01D 33/00, B62D 55/116

(54) **Selbstfahrende Hackfrucht-Erntemaschine**
Self-propelled root crop harvester
Récolteuse automotrice de tubercules

(30) Priorität: 11.09.2001 DE 10144621
(43) Veröffentlichungstag der Anmeldung: 12.03.2003
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Busse & Busse Patentanwälte

(56) Entgegenhaltungen:
- EP-A- 0 547 885
- EP-A- 1 114 577
- CH-A- 370 655
- DE-U- 7 101 995
- FR-A- 2 533 798
- US-A- 3 423 910
- US-B1- 6 209 669

## Beschreibung

Die Erfindung betrifft eine selbstfahrende Hackfrucht-Erntemaschine in einer Ausbildung gemäß dem Oberbegriff des Anspruchs 1.

Bekannte Hackfruchterntemaschinen dieser Art haben bei Ausbildung als KartoffelErntemaschine ein ein- oder mehrreihiges Rodeschar als Aufnahmevorrichtung und eine sich an das Rodeschar anschließende Siebförderkette, an die sich weitere Förderer wie Sternförderer, Krautelevatoren und Steilförderer für die Bunkerbeschikkung oder dergleichen anschließen. Das Fahrwerk besteht aus Lauf- und Lenkrädern, wobei Ausführungen mit vorderen Lenkrädern und solche mit hinteren Lenkrädern bekannt sind.

Aus der Schrift EP 0 547 885 A1 ist eine mit einem Vollraupen-Fahrwerk ausgestattete Hackfrucht-Erntemaschine bekannt. Eine Lageanpassung dieser Maschine bei einer Ernte schräg zu einem Hang ist allerdings nicht vorgesehen. Aus der Schrift CH 370 655 ist eine landwirtschaftliche Erntemaschine mit einem Vollraupenfahrwerk bekannt, dessen seitliche Raupenkörper höhenverstellbar und dabei in und entgegen der Fahrtrichtung der Maschine vor- und zurückverstellbar ausgestaltet sind, um eine Lageanpassung der Erntemaschine für Erntearbeiten quer zum Hang zu ermöglichen. Eine Fahrt mit dieser Maschine quer zum Hang bedarf jedoch der ständigen Aufmerksamkeit des Fahrers, weil dieser insbesondere bei wechselndem Gefälle des befahrenen Hanges nicht nur ständig die Querlage der Maschine nachregeln, sondern auch die von ihm gesteuerte Fahrtrichtung an die Hangabtrift anpassen muss.

Die Erfindung befaßt sich mit dem Problem, eine Großerntemaschine für Hackfrüchte, insbesondere Kartoffeln, zu schaffen, die straßentauglich ist und dabei die für eine Verkehrszulassung vorgegebenen Abmessungen in Länge, Breite und Höhe möglichst weitgehend ausnutzen kann.

Die Erfindung löst das Problem durch eine Maschine mit den Markmalen des Anspruchs 1. Hinsichtlich weiterer Ausgestaltungen wird auf die Ansprüche 2 bis 22 verwiesen.

Die Ausbildung des vorderen, bei einer Großmaschine die Hauptlast aufnehmenden Fahrwerks als Raupenfahrwerk mit höhenverstellbaren und dabei in und entgegen Fahrtrichtung der Maschine vor- und zurückverstellbaren Raupenschiffen sichert nicht nur bei Straßenfahrt, sondern insbesondere in Betrieb auf dem Felde für eine bodengerechte Abstützung, wobei die Verstellbarkeit der Raupenschiffe zugleich die Hangtauglichkeit der Maschine sichert.

Weitere Einzelheiten und Wirkungen ergeben sich aus der nachfolgenden Beschreibung und der Zeichnung, in der ein Ausführungsbeispiels des Gegenstands der Erfindung näher veranschaulicht ist. In der Zeichnung zeigen:
- Fig. 1: eine schematische Seitenansicht einer selbstfahrenden Hackfrucht-Erntemaschine nach der Erfindung im Transportzustand,
- Fig. 2: eine Rückansicht der Maschine in Fig. 1,
- Fig. 3: eine Seitenansicht ähnlich Fig. 1 der Maschine in Betriebszustand,
- Fig. 4: eine Rückansicht ähnlich Fig. 2 der Maschine in Betriebszustand gemäß Fig. 3,
- Fig. 5: eine Draufsicht auf die Maschine gemäß Fig. 3 und 4,
- Fig. 6: eine vergrößerte, abgebrochene Seitenansicht der Maschine zur Veranschaulichung der Aufnahmevorrichtung in Transportstellung der Teile,
- Fig. 7: eine Seitenansicht ähnlich Fig. 6 zur Veranschaulichung der Teile in Betriebsstellung,
- Fig. 8: eine schematische Draufsicht auf den Haupt-Maschinenrahmen bei Stellung der Teile für einen Betrieb auf ebenem Boden,
- Fig. 9: eine Seitenansicht zu Fig. 8,
- Fig. 10: eine Draufsicht ähnlich Fig. 8 zur Veranschaulichung der Teile im Hangbetrieb,
- Fig. 11: in Seitenansicht das talseitige Raupenschiff im Hangbetrieb,
- Fig. 12: eine Rückansicht zu Fig. 8 und 9, und
- Fig. 13: eine Rückansicht zu Fig. 10 und 11.

Die in der Zeichnung veranschaulichte selbstfahrende Hackfrucht-Erntemaschine bildet eine Großerntemaschine, welche die für die Straßenfahrt zulässigen Abmessungen von 12 m in der Länge, 4 m in der Höhe und 3,30 m in der Breite weitgehend ausnutzt. Im einzelnen umfaßt die Maschine einen Maschinen-Hauptrahmen 1, der sich über ein Fahrwerk auf dem Boden abstützt. Dieses Fahrwerk sieht als rückwärtigen Teil ein im Heckbereich der Maschine abgestütztes Doppelrad 2 als Lenkrad vor, das um eine Hochachse 3 über eine Lagervorrichtung 4 schwenkbar abgestützt und mittels einer Antriebsvorrichtung 5 zu Lenkungszwecken betätigbar ist.

Der vordere Teil des Fahrwerks ist von zwei im Abstand parallel nebeneinander angeordneten, durch eine Abstützvorrichtung 6 am Maschinen-Hauptrahmen 1 abgestützten Raupenschiffen 7,8 gebildet, die entsprechend ihrer großen Aufstandsfläche bei niedrigen Bodendrücken hohe Lasten aufzunehmen geeignet sind.

Am stirnseitigen Ende des Maschinen-Hauptrahmens 1 ist eine als Ganzes mit 9 bezeichnete Aufnahmevorrichtung für Erntegut abgestützt, auf deren Ausgestaltung weiter unten noch eingegangen wird. An die Aufnahmevorrichtung 9 schließen sich Förderer 10,11,12,13 an, von denen der Förderer 13 als Steilförderer ausgebildet ist, der Erntegut einem Sammelbunker 15 zuführt, der vor dem Steilförderer und hinter einer Fahrerkabine 16 auf dem Maschinen-Hauptrahmen 1 abgestützt ist. Diese Förderer definieren einen Erntegut-Förderweg ohne Seitenrichtungsänderung. Ein Maschinengehäuse 17 im Heckbereich der Maschine nimmt einen nicht näher veranschaulichten Antriebsmotor auf, der über ein Hydrauliksystem Hydraulikmotore oder hydraulische Stellantriebe für den Antrieb der einzelnen Aggregate betätigt.

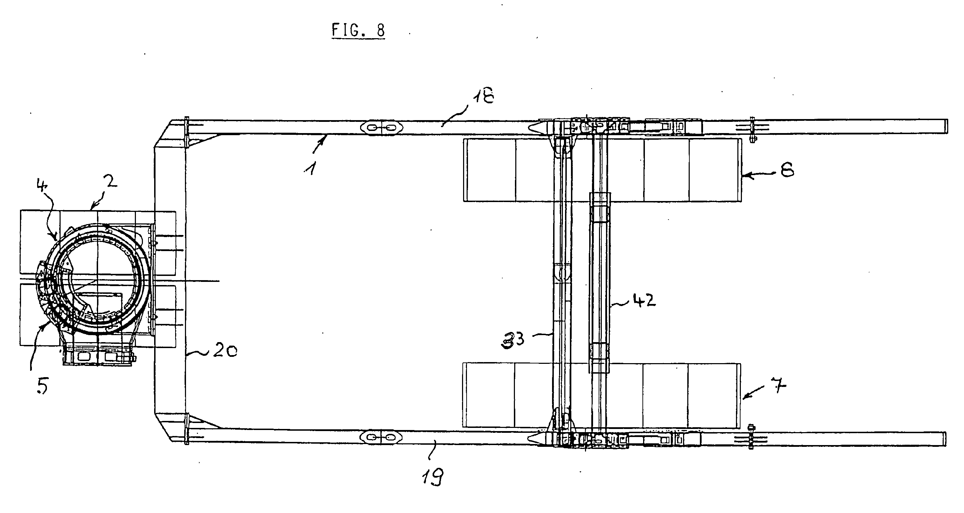

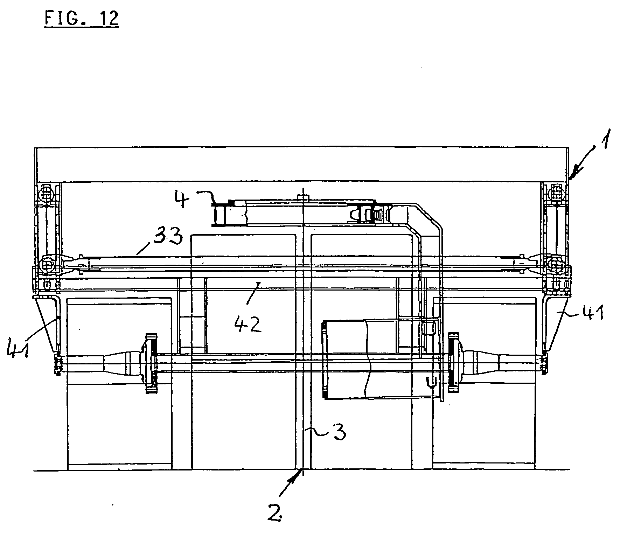

Wie die Fig. 8 bis 13 näher erkennen lassen, umfaßt der Maschinen-Hauptrahmen 1 zwei Außenlängsträger 18,19 und einen heckseitigen Querträger 20. An den Außenlängsträgern 18,19 sind die Raupenschiffe 7,8 über ihre untereinander jeweils gleichen Abstützvorrichtungen 6 abgestützt, die lediglich am außenseitigen Längsrand an den Raupenschiffen 7,8 angreifen. Durch derart kurze Krafteinleitungswege ergibt sich eine erhebliche Gewichtsersparnis. Im einzelnen umfassen die Abstützvorrichtungen Parallellenker 22,23, die bei 24 bzw. 25 an einem Auslegerarm 26 angreifen, der fest mit dem Maschinen-Hauptrahmen 1 verbunden ist. Mit ihren der Fahrtrichtung 27 abgewandten Enden greifen die Parallellenker 22,23 bei 29,30 gelenkig an einem dem Raupenschiff 7,8 jeweils zugeordneten Anschlußteil 31 an, das auf einem Trägerteil 40 befestigt ist, an dem das jeweilige Raupenschiffe 7,8 aufgehängt ist.

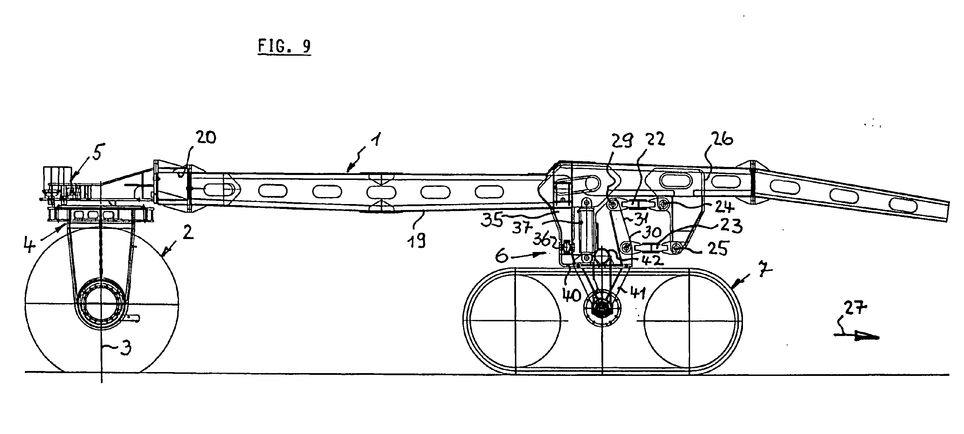

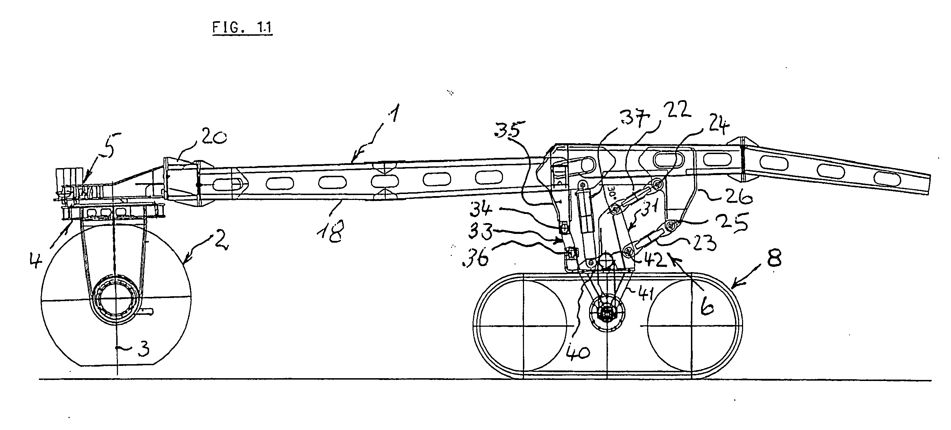

Im Abstand hinter den Parallellenkern 22,23 ist zur weiteren Führung der Raupenschiffe 7,8 eine begrenzt längenveränderliche Querstrebe 33 vorgesehen, die mit einem Ende bei 34 gelenkig an einem weiteren, mit dem Maschinen-Hauptrahmen 1 fest verbundenen Ausleger 35 und mit ihrem anderen Ende bei 36 gelenkig am Trägerteil 40 des gegenüberliegenden Raupenschiffs 7 angreift, der unterseitig mit Streben 41 für die Raupenschiff-Aufhängung versehen ist. Hinter den Parallellenkern 22,23 jeder Stützvorrichtung 6 befindet sich ein hydraulischer Stellantrieb 37, mittels dem das zugehörige Raupenschiff 7 bzw. 8 aus der Stellung für den Betrieb auf ebenen Böden, wie sie in Fig. 9 veranschaulicht ist, in eine Stellung überführbar ist, wie sie bei Hangarbeit erforderlich und beispielsweise in Fig. 11 veranschaulicht ist. Der Stellantrieb 37 greift einerseits am Maschinen-Hauptrahmen 1 und andererseits am Trägerteil 40 des zugeordneten Raupenschiffs 7 bzw. 8 an.

Die Parallellenker 22,23 und der Stellantrieb 37 einer jeder Abstützvorrichtung 6 sind in Fahrtrichtung 27 der Maschine hintereinander und dabei unterhalb des Außenlängsträgers 18 bzw. 19 angeordnet, so daß auf diese Weise kurze Kraftaufnahmewege zum Maschinen-Hauptrahmen 1 verwirklicht und die Teile der Abstützung dem verschmutzungsgefährdeten Bereich der Maschine entzogen sind.

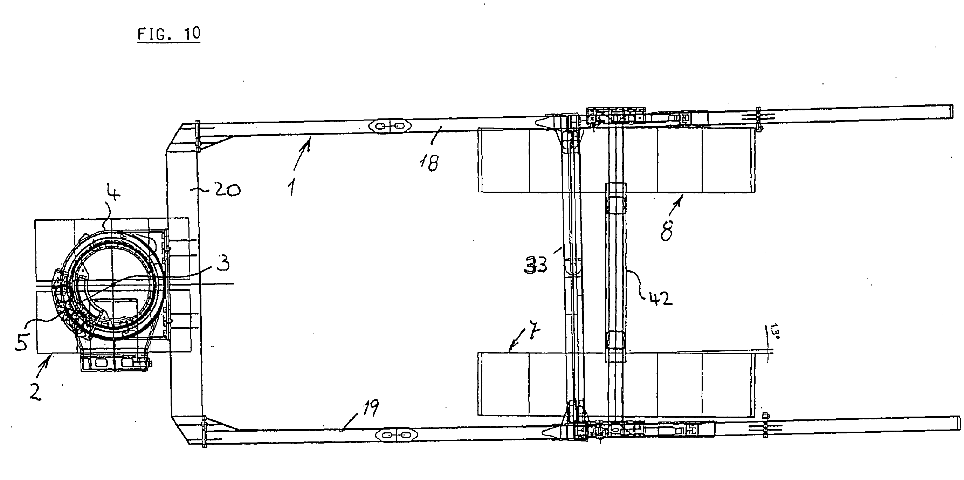

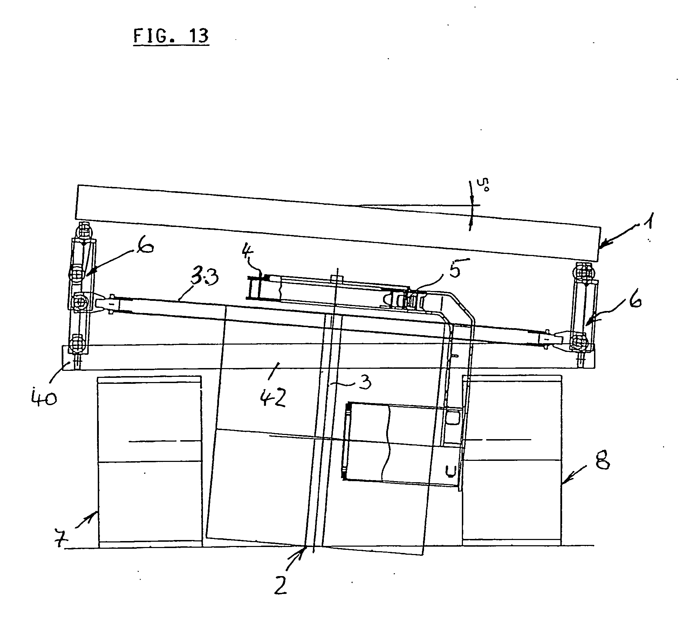

Die Trägerteile 40 der Raupenschiffe 7,8 sind durch einen Querholm 42 untereinander verbunden. Wird, wie dies die Fig. 11 und 13 veranschaulichen, für Arbeiten am Hang zum Zwecke des Hangausgleichs das talseitige Raupenschiff 8 abgesenkt, so erfährt mit dieser Absenkung infolge der Führung durch die Parallellenker 22,23 das Raupenschiff 8 zugleich eine Verlagerung in Fahrtrichtung 27 der Maschine, wodurch auch die Querstrebe 33 eine entsprechende Verlagerung ausführt, die eine geringfügige, bei dem dargestellten Beispiel (Fig. 10) 1,3° betragende Verschwenkung beider Raupenschiffe 7,8 zur Hangseite hin herbeiführt. Diese durch die Querstrebe 33 infolge ihrer Verlagerung beim Absenken eines Raupenschiffes herbeigeführte Verschwenkung schafft jenen Hangausgleich und zugleich eine Lenkwirkung, die ein Arbeiten der Maschine auf gleicher Höhenlinie ermöglichen.

Die eingangs erwähnten Fördermittel umfassen einen der Aufnahmevorrichtung 9 nachgeordneten Siebkettenförderer 11, der sich über die Raupenschiffe 7,8 hinweg erstreckt und dabei eine Breite hat, die im wesentlichen dem Abstand zwischen den Längsrahmenstreben 18,19 des Maschinen-Hauptrahmens 1 entspricht. Dementsprechend kann der beispielsweise von Rodescharen der Aufnahmevorrichtung 9 ausgehobene Damm aus Erdreich und Feldfrüchten, insbesondere Kartoffeln, in voller Aushubbreite gefördert und dabei das Erdreich abgesiebt werden, so daß bei Ausnutzung der für Straßenfahrt zulässigen Gesamtbreite der Maschine diese beispielsweise für das Ernten von Kartoffeln als vierreihige Maschine ausgeführt werden kann.

Da eine Aufnahmevorrichtung 9 mit entsprechender Arbeitsbreite ein erhebliches Gewicht aufweist und dabei in einem ebenfalls erheblichen Abstand vor den Raupenschiffen 7,8 gelegen ist, werden die Raupenschiffe 7,8 trotz einer Teilentlastung durch die hinsichtlich des Dammdrucks geregelten Dammrollen erheblich belastet, so daß zur weiteren Entlastung die Aufnahmevorrichtung 9 zumindest eine in der Höhe relativ zum Maschinen-Hauptrahmen 1 einstellbare Stützrolle 44 umfaßt, die bei einer Aufnahmevorrichtung 9 für das gleichzeitige Ernten von Kartoffeln in vier Reihen beispielsweise von einem die beiden Sechscheiben zwischen den benachbarten Paaren von Rodescharen 43 verbindenden Trommelteil gebildet sein kann und zur weiteren Entlastung der Raupenschiffe 7,8 beiträgt.

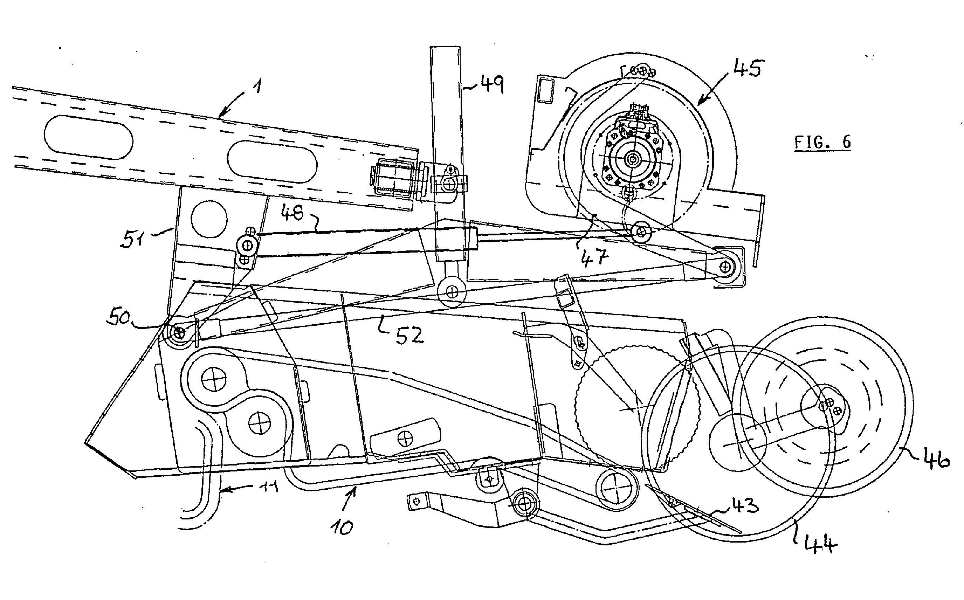

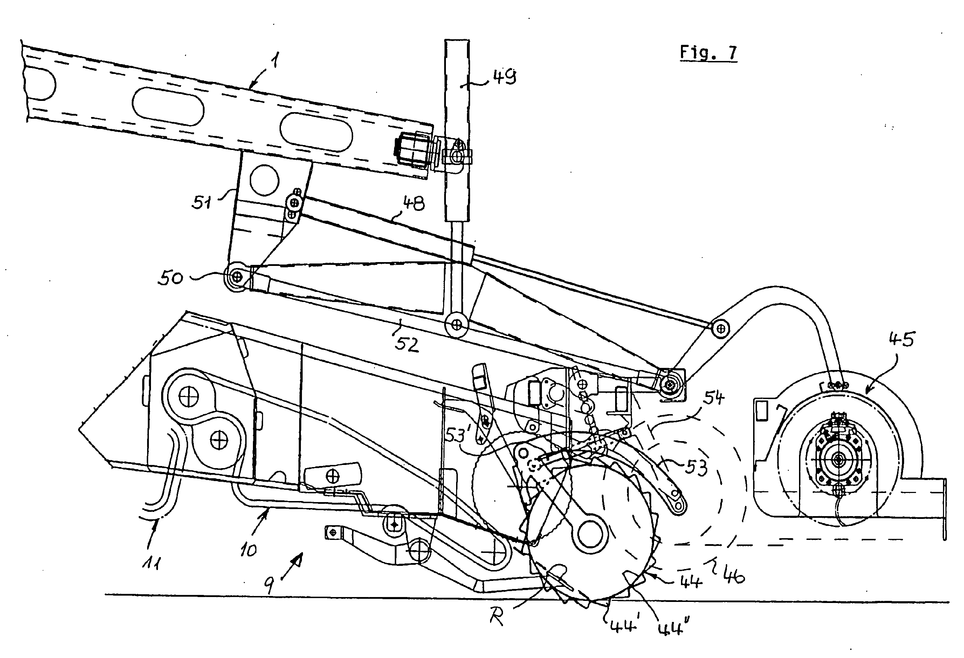

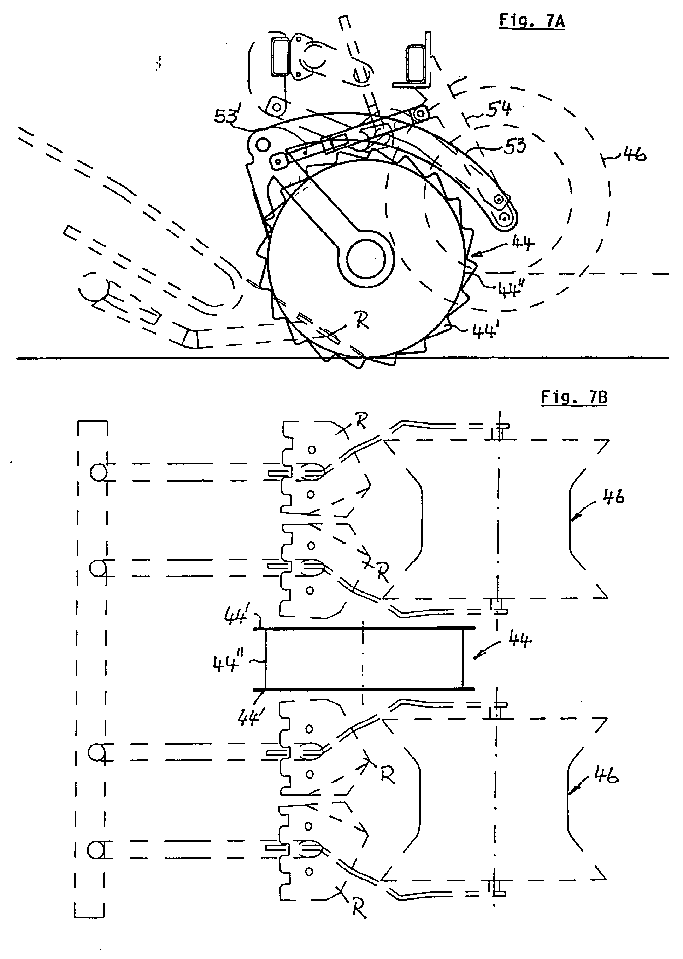

Eine solche Entlastung ist um so bedeutsamer, als der Aufnahmevorrichtung 9 bei Ausbildung für das Ernten von Kartoffeln eine für sämtliche Reihen gemeinsame Krautschlägerwalze 45 vorausläuft, die mit ihrem Gewicht die Raupenschiffe 7,8 zusätzlich belastet, zumal sie vor den Dammtrommeln 46 arbeitet. Zur Entlastung der Raupenschiffe 7,8 während der Transportfahrten und zugleich zur Reduzierung der Gesamtlänge der Großerntemaschine auf ein zulässiges Maß ist die Krautschlägerwalze 45 mittels eines Schwenkhebels 47 und eines Druckmittelantriebs 48 aus ihrer Betriebsstellung in Fig. 7 in eine Straßenfahrtstellung gemäß Fig. 6 zurückklappbar.

Die Aufnahmevorrichtung 9 ist als Ganzes in ihrer Höhenlage zum Maschinen-Hauptrahmen 1 auf und ab verstellbar, und zwar mittels eines Stellantriebs 49, der auf einen um das Gelenk 50 an einem Ausleger 51 des Maschinen-Hauptrahmens 1 schwenkbaren, rahmenförmigen Hebel 52 wirkt, an dessen vorderen Ende nicht nur der Schwenkhebel 47 für die Krautschlägerwalzen 45, sondern auch der vordere Bereich der Aufnahmevorrichtung 9 aufgehängt ist.

Zur Höhenverstellung der Stützrolle 44 ist diese mittels eines Hebels 53 schwenkbar an einem Trägerstrebe 54 für die Dammrollen 46 mittels eines Stellantriebs 53' ein- und feststellbar abgestützt.

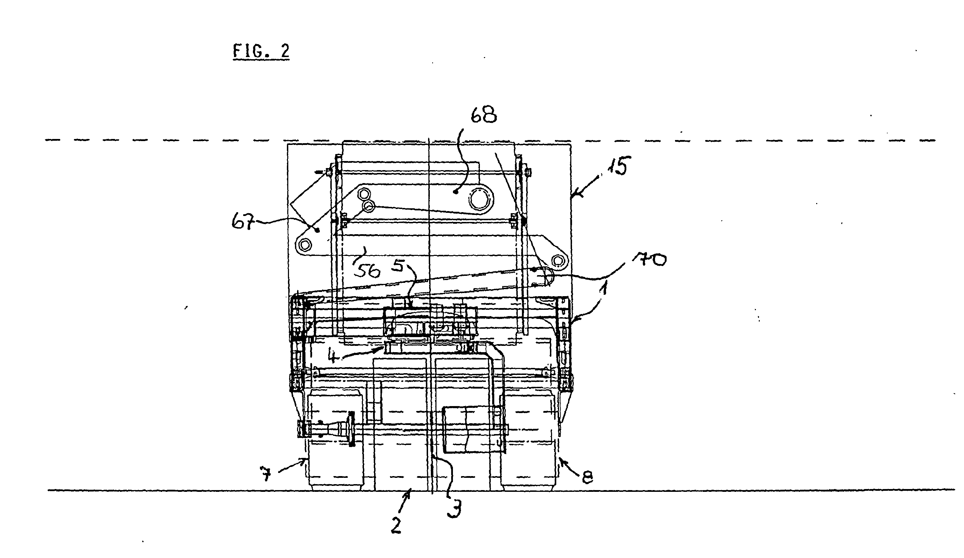

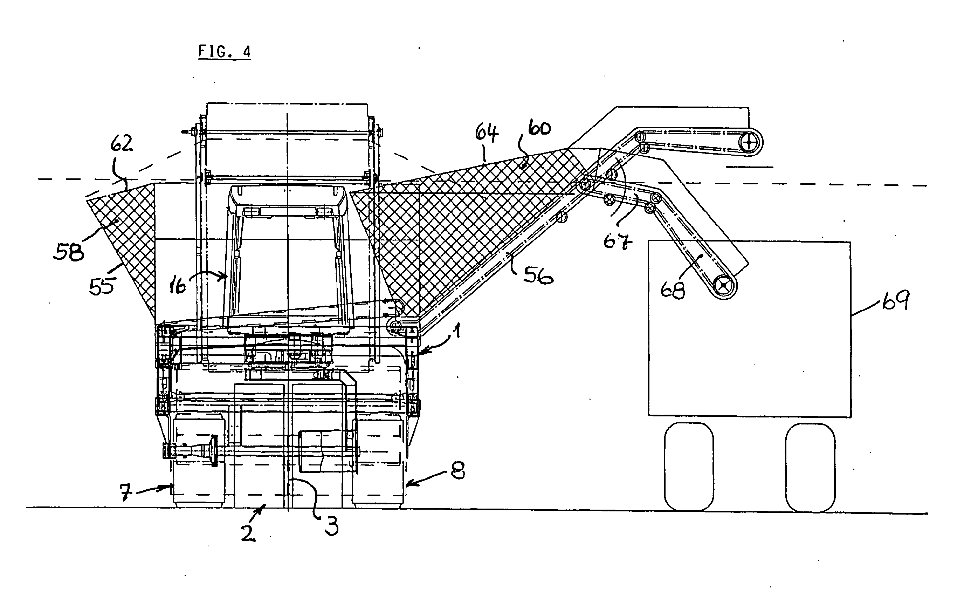

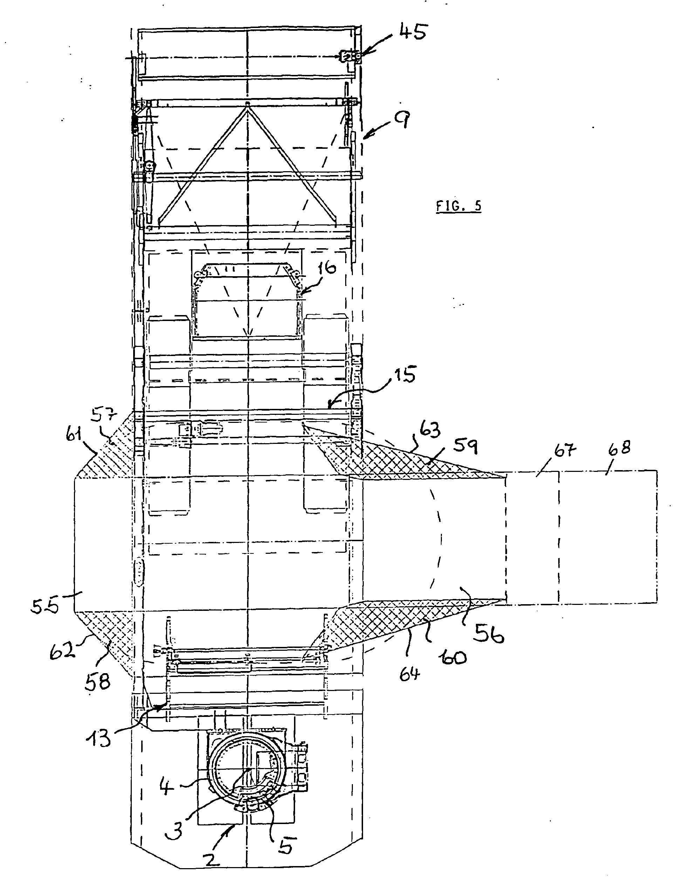

Da eine die für Straßenfahrt zulässigen Abmessungen weitgehend ausschöpfende Großerntemaschine, z.B. eine vierreihige Kartoffelerntemaschine, eine entsprechend hohe Ernteleistung erbringt, sieht die Erfindung vor, daß der Sammelbunker 15 starre Seitenbegrenzungen 55,56 aufweist, die aus einer im wesentlichen senkrechten Transportstellung innerhalb der in Fig. 2 wiedergegebenen Kontur des Sammelbunkers 15 ausklappbar sind und der ausgeklappten Betriebsstellung dem Sammelbunker 15 einen wesentlich vergrößerten Sammelraum vorgeben. Wie den Fig. 4 und 5 entnommen werden kann, sind die seitlichen Randkanten der starren Seitenbegrenzungen 55,56 mit den ihnen in der Transportstellung gegenüberliegenden Randkanten der benachbarten querseitigen starren Bunkerwände jeweils durch flexible Zwischenwandteile 57,58,59,60 verbunden, die von gewebten Tüchern oder Folien aus Gummi oder Kunststoff bestehen können und zweckmäßig Armierungen aufweisen. Die oberen Randkanten 61,62,63,64 der flexiblen Zwischenwände sind bevorzugt durch Zugseile, -ketten oder -bänder verstärkt, die zugleich ein Begrenzungsmittel für die Begrenzung des Ausklappwinkels der Seitenbegrenzungsteile 55,56 bilden können.

Die starre Seitenbegrenzung 56, die im Erntebetrieb einem abgeernteten Feldbereich zugewandt ist, ist bevorzugt als Austragförderer ausgebildet, der zwei Verlängerungsteile 67,68 umfaßt, die sich an sein oberes, mit der oberen Randkante des Sammelbunkers 15 zusammenfallendes Ende gelenkig anschließen und einen Austrag des Erntegutes in einen Transportwagen 69 (Fig. 4) ermöglichen. Das äußere Verlängerungsteil 68 ist dabei zweckmäßig als in der Länge veränderlicher Förderer ausgebildet. In Transportstellung ist der Austragförderer 56,67,68 bevorzugt in eine innerhalb der Kontur des Sammelbunkers 15 gelegene Ruhestellung einklappbar, die in Fig. 2 angedeutet ist. Der Austragförderer 56,67,68 kann im übrigen mit einem Bodenförderer 70 zusammenwirken, so daß eine vollständige Bunkerentleerung unschwer möglich ist.

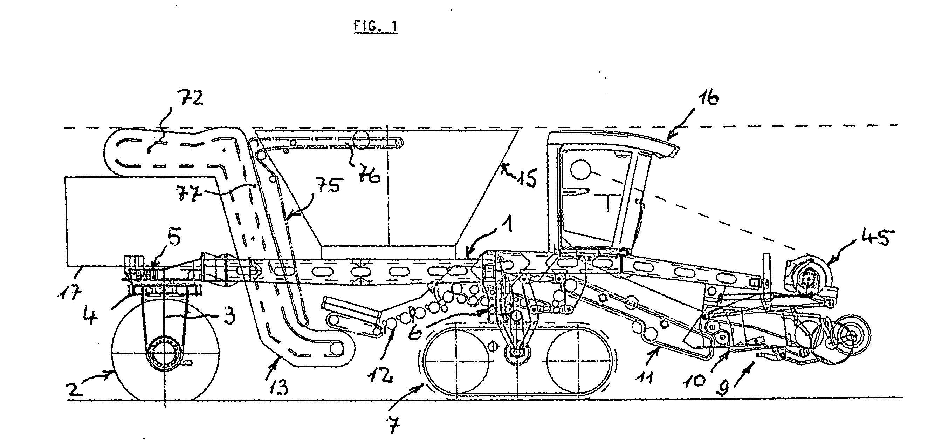

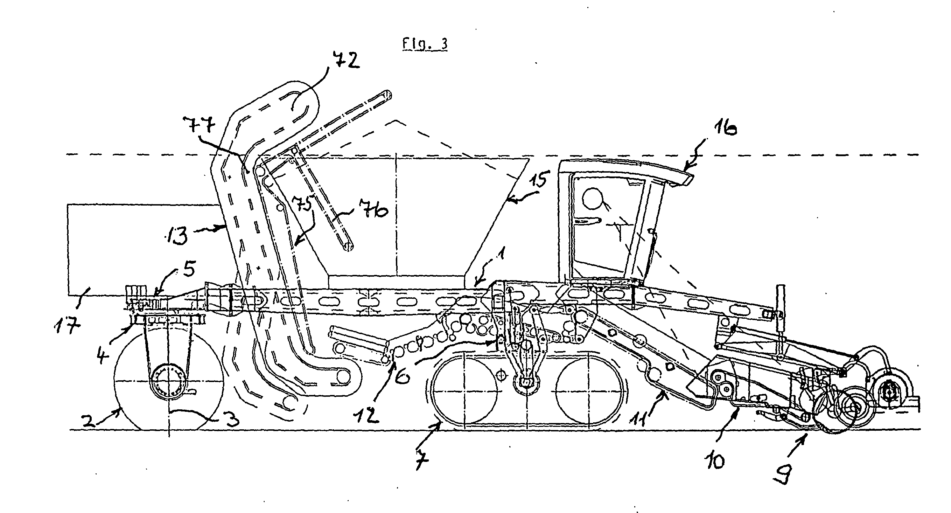

Der zur Beschickung des Sammelbunkers 15 mit Erntegut vorgesehene, an der Rückseite des Sammelbunkers 15 angeordnete Steilförderer 13 weist einen Endteil 72 auf, der, wie die Fig. 1 und 3 erkennen lassen, aus einer Transportstellung (Fig. 1) in eine Betriebsstellung (Fig. 3) klappbar ist, in der er sich über den oberen Begrenzungsrand des Sammelbunkers 15 hinweg zu dessen Innenraum erstreckt. Dabei ist dem Fördertrum des Steilförderers 13 ein Hilfsförderer 75 zugeordnet, der seinerseits ein klappbares Endteil 76 aufweist und gemeinsam mit dem Steilförderer 13,72 die Steilförderung und ein verteilendes Einbringen des Erntegutes im Sammelbunker 15 sichert. Denn die Fördertrums der Förderer 13 und 75 bilden gemeinsam einen Förderkanal 77, der am Fuß des Steilförderers 13 beginnt und innerhalb des Umrisses des Sammelbunkers 15 endet.

## Patentansprüche

1. Selbstfahrende Hackfrucht-Erntemaschine, mit einem sich über ein Fahrwerk (2;7,8) auf dem Boden abstützenden Maschinen-Hauptrahmen (1), einer am Maschinen-Hauptrahmen (1) stirnseitig abgestützten Aufnahmevorrichtung (9) für Erntegut, sich an die Aufnahmevorrichtung anschließenden Fördermitteln (10,11,12, 13), mit einem Sammelbunker (15), der von einem Steilförderer (13) mit Erntegut beschickbar ist, wobei der vordere Teil des Fahrwerks von zwei im Abstand parallel nebeneinander angeordneten, jeweils durch eine Abstützvorrichtung (6) am Maschinen-Hauptrahmen (1) höhenverstellbaren und dabei in und entgegen der Fahrtrichtung (27) der Maschine vor- und zurückverstellbar abgestützten Raupenschiffen (7, 8) gebildet ist, **dadurch gekennzeichnet, dass** die Raupenschiffe (7, 8) mittels Parallellenker (22, 23) geführt und mittels eines Stellantriebs (37) höheneinstellbar sind und die Raupenschiffe (7;8) zusätzlich zu den Parallellenkern (22,23) durch eine im Abstand hinter den Parallellenkern angeordnete Querstrebe (33) geführt sind, die an ihrem einen Ende gelenkig an einem Ausleger (35) des Maschinen-Hauptrahmens (1) und an ihrem anderen Ende gelenkig an einem Trägerteil (40) eines der Raupenschiffe (7;8) angreift.

2. Maschine nach Anspruch 1, **dadurch gekennzeichnet, dass** die Parallellenker (22,23) eine zur Fahrtrichtung (27) parallele Ausrichtung haben und mit ihren der Fahrtrichtung (27) abgewandten Enden an den Raupenschiffen (7;8) angreifen.

3. Maschine nach Anspruch 1 oder 2, **dadurch gekennzeichnet, dass** der Stellantrieb (37) jeweils hinter den Enden der Parallellenker (22,23) angeordnet ist, einerseits am Raupenschiff (7;8) und andererseits am Maschinen-Hauptrahmen (1) abgestützt ist.

4. Maschine nach einem der Ansprüche 1 bis 3, **dadurch gekennzeichnet, dass** die Raupenschiffe (7;8) lediglich im Bereich ihres außenseitigen Längsrandes durch ihre Abstützvorrichtung (6) am Maschinen-Hauptrahmen (1) abgestützt sind.

5. Maschine nach einem der vorhergehenden Ansprüche, **dadurch gekennzeichnet, dass** die Parallellenker (22,23) und der Stellantrieb (37) einer jeden Abstützvorrichtung (6) in Fahrtrichtung (27) der Maschine hintereinander und dabei unterhalb eines Außenlängsträgers (18;19) des Maschinen-Hauptrahmens (1) angeordnet sind.

6. Maschine nach einem der vorhergehenden Ansprüche, **dadurch gekennzeichnet, dass** die Trägerteile (40) der Raupenschiffe (7;8) durch einen Querholm (42) untereinander verbunden sind.

7. Maschine nach einem der vorhergehenden Ansprüche, **dadurch gekennzeichnet, dass** die Querstrebe (33) begrenzt längenveränderlich ausgebildet ist.

8. Maschine nach einem der Ansprüche 1 bis 7, **dadurch gekennzeichnet, dass** die Fördermittel einen der Aufnahmevorrichtung (9) nachgeordneten Siebkettenförderer (11) umfassen, der sich über die Raupenschiffen (7;8) erstreckt und eine Breite hat, die im wesentlichen dem Abstand zwischen den Längsrahmenstreben (18,19) des Maschinen-Hauptrahmens (1) entspricht.

9. Maschine nach Anspruch 8, **dadurch gekennzeichnet, dass** die Aufnahmevorrichtung (9) für Erntegut zumindest ein den Boden überlaufendes Stützrad (44) umfaßt, das relativ zum Maschinen-Hauptrahmen (1) mittels eines Stellantriebs (53') relativ zur Aufnahmevorrichtung (9) höhenverstellbar abgestützt ist.

10. Maschine nach einem der vorhergehenden Ansprüche, **dadurch gekennzeichnet, dass** die Aufnahmevorrichtung (9) zumindest eine ihr in Fahrtrichtung (27) vorgeordnete Krautschlägerwalze (45) umfaßt und diese aus ihrer Betriebsstellung entgegen Fahrtrichtung (27) aufwärts und rückwärts in eine Transportstellung oberhalb der Aufnahmevorrichtung (9) klappbar ist.

11. Maschine nach einem der Ansprüche 1 bis 10, **dadurch gekennzeichnet, dass** der Sammelbunker (15) aus einer im wesentlichen senkrechten Transportstellung ausklappbare starre Seitenbegrenzungen (55, 56) aufweist, deren seitliche Randkanten mit den ihnen in der Transportstellung gegenüberliegenden Randkanten der benachbarten starren Bunkerwände durch flexible Zwischenwandteile (57, 58, 59, 60) verbunden sind.

12. Maschine nach Anspruch 11, **dadurch gekennzeichnet, dass** die flexiblen Zwischenteile (57, 58, 59, 60) von Tüchern gebildet sind.

13. Maschine nach Anspruch 11, **dadurch gekennzeichnet, dass** die flexiblen Zwischenteile (57, 58, 59, 60) von Folien aus Gummi oder Kunststoff gebildet sind.

14. Maschine nach einem der Ansprüche 11 bis 13, **dadurch gekennzeichnet, dass** die flexiblen Zwischenwandteile (57, 58, 59, 60) mit Armierungen versehen sind.

15. Maschine nach Anspruch 11, **dadurch gekennzeichnet, dass** die oberen Randkanten (61, 62, 63, 64) der flexiblen Zwischenwände (57, 58, 59, 60) durch Zugseile, -ketten oder -bänder verstärkt sind.

16. Maschine nach einem der Ansprüche 11 bis 15, **dadurch gekennzeichnet, dass** die im Erntebetrieb dem abgeernteten Feldbereich zugewandte starre Seitenbegrenzung (56) des Sammelbunkers (15) als Austragförderer ausgebildet ist.

17. Maschine nach einem der Ansprüche 11 bis 16, **dadurch gekennzeichnet, dass** der Austragförderer zwei sich gelenkig an seinen den ausklappbaren Seitenbegrenzungsteil des Sammelbunkers bildenden Fördererteil (56) gelenkig anschließende Verlängerungsteile (67, 68) aufweist, die in Transportstellung des Austragsförderers (56, 67, 68) in eine innerhalb der Kontur des Sammelbunkers (15) gelegene Ruhestellung einklappbar sind.

18. Maschine nach Anspruch 17, **dadurch gekennzeichnet, dass** der äußere Verlängerungsteil (68) als längenveränderlicher Förderer ausgebildet ist.

19. Maschine nach einem der Ansprüche 1 bis 18, **dadurch gekennzeichnet, dass** der Steilförderer (13) an der Rückseite des Sammelbunkers (15) einen klappbaren Endteil (72) aufweist, der aus einer zur Rückseite der Maschine weisenden, horizontalen Ruhestellung in eine Betriebsstellung klappbar ist, in der er sich über die Bunkeröffnung erstreckt.

20. Maschine nach Anspruch 19, **dadurch gekennzeichnet, dass** dem Fördertrum des Steilförderers (13) ein Hilfsförderer (75) zugeordnet ist, der mit dem Fördertrum des Steilförderers (13) einen Förderkanal (77) bildet.

21. Maschine nach Anspruch 20, **dadurch gekennzeichnet, dass** das Fördertrum des Hilfsförderers (75) in seinem oberen Bereich einen schwenkbaren, sich über die Öffnung des Sammelbunkers erstreckenden Endteil (76) aufweist, der mit dem Fördertrum des in Betriebsstellung befindlichen Endteils (72) des Steilförderers (13) einen richtbaren Kanalteil bildet.

22. Maschine nach einem der Ansprüche 1 bis 21, **dadurch gekennzeichnet, dass** der rückwärtige Fahrwerksteil von einem zum Lenken der Maschine um eine vertikale Mittelachse (3) verschwenkbaren Doppelrad (2) gebildet ist.

## Claims

1. Self-propelled root-crop harvester, having a main frame (1) which is supported on the ground by means of running gear (2, 7, 8), having a pick-up arrangement (9) for harvested crop which is supported at the leading end of the main frame (1) of the harvester, having feeding means (10, 11, 12, 13) which follow on from the pick-up arrangement (9), having a collecting hopper (15) which can be loaded with harvested crop by an elevator feeder (13), the front part of the running gear being formed by two caterpillar units (7, 8) which are arranged next to one another at a distance in parallel and which can each be adjusted vertically on the main frame (1) of the harvester by a supporting arrangement (6) and which are supported in such a way as to be adjustable, when this is done, forwards and backwards in the direction of travel (27) of the harvester and in the opposite direction, **characterised in that** the caterpillar units (7, 8) are guided by means of parallel links (22, 23) and are able to be set vertically by means of a positioning drive (37), and the caterpillar units (7, 8) are guided, as well as by the parallel links (22, 23), by a transverse strut (33) which is arranged at a distance behind the parallel links and which engages at one of its ends, by a joint, with an arm (35) projecting from the main frame (1) of the harvester and at its other end, by a joint, with a supporting part (40) belonging to one of the caterpillar units (7, 8).

2. Harvester according to claim 1, **characterised in that** the alignment of the parallel links (22, 23) is parallel to the direction of travel (27) and they engage with the caterpillar units (7, 8) by their ends facing away from the direction of travel (27).

3. Harvester according to claim 1 or 2, **characterised in that** each positioning drive (37) is arranged behind the ends of the parallel links (22, 23) and is supported on the one hand on the caterpillar unit (7, 8) and on the other hand on the main frame (1) of the harvester.

4. Harvester according to one of claims 1 to 3, **characterised in that** the caterpillar units (7, 8) are supported on the main frame (1) of the harvester by their supporting arrangements (6) simply in the region of their external longitudinal edges.

5. Harvester according to one of the foregoing claims, **characterised in that** the parallel links (22, 23) and the positioning drive (37) of each supporting arrangement (6) of the harvester are arranged, in the direction of travel (27) of the harvester, one behind the other and, at the same time, below an outer longitudinal girder (18, 19) of the main frame (1) of the harvester.

6. Harvester according to one of the foregoing claims, **characterised in that** the supporting parts (40) of the caterpillar units (7, 8) are connected together by a transverse beam (42).

7. Harvester according to one of the foregoing claims, **characterised in that** the transverse strut (33) is designed to be variable in length to a limited extent.

8. Harvester according to one of claims 1 to 7, **characterised in that** the feeding means comprise an open-web feeder (11) positioned downstream of the pick-up arrangement (9), which open-web feeder (11) extends over the caterpillar units (7, 8) and is of a width which substantially corresponds to the distance between the longitudinal beams (18, 19) of the main frame (1) of the harvester.

9. Harvester according to claim 8, **characterised in that** the pick-up arrangement (9) for harvested crop comprises at least one supporting wheel (44) which travels over the ground and which, relative to the main frame (1) of the harvester, is supported to be adjustable vertically relative to the pick-up arrangement (9) by means of a positioning drive (53').

10. Harvester according to one of the foregoing claims, **characterised in that** the pick-up arrangement (9) comprises at least one haulm pulverising roller (45) which is positioned in front of it in the direction of travel, and this haulm pulverising roller (45) can be folded upwards and backwards from its operating position, in the opposite direction to the direction of travel (27), to a position for transport above the pick-up arrangement (9).

11. Harvester according to one of claims 1 to 10, **characterised in that** the collecting hopper (15) has rigid lateral boundaries (55, 56) which can be folded out from a substantially vertical position for transport, the lateral edges of which lateral boundaries (55, 56) are connected by flexible intermediate wall-parts (57, 58, 59, 60) to those edges of the adjacent rigid walls of the hopper which are situated opposite the lateral edges in the position for transport.

12. Harvester according to claim 11, **characterised in that** the flexible intermediate parts (57, 58, 59, 60) are formed by cloths.

13. Harvester according to claim 11, **characterised in that** the flexible intermediate parts (57, 58, 59, 60) are formed by sheets of rubber or plastics material.

14. Harvester according to one of claims 11 to 13, **characterised in that** the flexible intermediate wall parts (57, 58, 59, 60) are provided with reinforcements.

15. Harvester according to claim 11, **characterised in that** the top edges (61, 62, 63, 64) of the flexible intermediate walls (57, 58, 59, 60) are reinforced by traction cables, traction chains or traction strips.

16. Harvester according to one of claims 11 to 15, **characterised in that that** rigid lateral boundary (56) of the collecting hopper (15) which is adjacent the field region which has been harvested in harvesting operation is in the form of a discharge feeder.

17. Harvester according to one of claims 11 to 16, **characterised in that** the discharge feeder has two extension portions (67, 68) which are connected by joints to its feeder portion (56), which latter forms the lateral boundary portion, able to be folded out, of the collecting hopper, which extension portions (67, 68) can be folded in, when the discharge feeder (56, 57, 58) is in the position for transport, to a rest position in which they are within the outline of the collecting hopper (15)

18. Harvester according to claim 17, **characterised in that** the outer extension portion (68) is in the form of a feeder whose length can be varied.

19. Harvester according to one of claims 1 to 18, **characterised in that** the elevator feeder (13) has, at the rear end of the collecting hopper (15), a foldable end part (72) which can be folded from a horizontal rest position in which it points towards the rear end of the harvester to an operating position in which it extends over the opening of the hopper.

20. Harvester according to claim 19, **characterised in that** the feeding run of the elevator feeder (13) has associated with it an auxiliary feeder (75) which forms, with the feeding run of the elevator feeder (13), a feeding passage (77).

21. Harvester according to claim 20, **characterised in that** the feeding run of the auxiliary feeder (75) has, in its upper region, a pivotable end portion (76) which extends over the opening of the collecting hopper and which, when the end portion (72) of the elevator feeder (13) is in its operating position, forms with the feeding run (72) of the said end portion (72), a directable part of the passage.

22. Harvester according to one of claims 1 to 21, **characterised in that** the rear part of the running gear is formed by a twin wheel (2) which can be pivoted about a vertical centre axis (3) to steer the harvester.

## Revendications

1. Récolteuse automotrice de tubercules comportant un châssis principal de machine (1) s'appuyant sur le sol par l'intermédiaire d'un train (2;7;8), un dispositif de ramassage (9) de la récolte supporté du côté frontal du châssis principal de machine (1), des moyens de convoyage (10, 11, 12, 13) associés au dispositif de ramassage (9), une trémie de collecte (15), laquelle peut être chargée avec la récolte par un convoyeur vertical (13), la partie avant du train étant formée par deux voies chenillées (7, 8) disposées en parallèle à distance l'une de l'autre, supportées chaque fois au châssis principal de machine (1) par un dispositif d'appui (6) de façon à pouvoir être déplacées en hauteur et en l'occurrence en avant et en arrière dans et à l'encontre du sens de déplacement (27) de la récolteuse, **caractérisée en ce que** les voies chenillées (7, 8) sont guidées au moyen de biellettes de direction parallèles (22, 23) et sont réglables en hauteur au moyen d'un vérin (37) et **en ce que** les voies chenillées (7, 8) sont guidées, en plus des biellettes de direction parallèles (22, 23), par une barre transversale (33) disposée à distance derrière les biellettes de direction parallèles (22, 23), laquelle barre transversale (33) est reliée à l'une de ses extrémités de façon articulée à un avant-bras (35) du châssis principal de machine (1) et à l'autre extrémité de façon articulée à un support (40) de l'une des voies chenillées (7;8).

2. Récolteuse selon la revendication 1, **caractérisée en ce que** les biellettes de direction parallèles (22, 23) possèdent une orientation parallèle au sens de déplacement (27) de la récolteuse et agissent sur les voies chenillées (7, 8) par leurs extrémités détournées du sens de déplacement (27).

3. Récolteuse selon la revendication 1 ou 2, **caractérisée en ce que** le vérin (37) est disposé chaque fois derrière les extrémités des biellettes de direction parallèles (22, 23) et est relié d'un côté à la voie chenillée (7;8) et de l'autre côté au châssis principal de machine (1).

4. Récolteuse selon l'une quelconque des revendications 1 à 3, **caractérisée en ce que** les voies chenillées (7, 8) sont supportées par leur dispositif d'appui (6) au châssis principal de machine (1) uniquement dans la zone de leur bord longitudinal situé du côté extérieur.

5. Récolteuse selon l'une quelconque des revendications précédentes, **caractérisée en ce que** les biellettes de direction parallèles (22, 23) et le vérin (37) du dispositif d'appui (6) sont disposés l'un derrière l'autre dans le sens de déplacement (27) de la récolteuse et en l'occurrence au-dessous d'un longeron extérieur (18;19) du châssis principal de machine (1).

6. Récolteuse selon l'une quelconque des revendications précédentes, **caractérisée en ce que** les supports (40) des voies chenillées (7, 8) sont reliés entre eux par une traverse (42).

7. Récolteuse selon l'une quelconque des revendications précédentes, **caractérisée en ce que** la barre transversale (33) est conformée de façon variable et limitée en longueur.

8. Récolteuse selon l'une quelconque des revendications 1 à 7, **caractérisée en ce que** les moyens de convoyage comportent un convoyeur à chaîne de tamisage (11) disposé en aval du dispositif de ramassage (9), lequel convoyeur (11) s'étend au-dessus des voies chenillées (7, 8) et présente une largeur correspondant substantiellement à la distance entre les longerons (18, 19) du châssis principal de machine (1).

9. Récolteuse selon la revendication 8, **caractérisée en ce que** le dispositif de ramassage (9) de la récolte comporte au moins une roue d'appui (44) se déplaçant au-dessus du sol, laquelle est supportée par rapport au châssis principal de machine (1) au moyen d'un vérin (53') de façon à pouvoir être déplacée en hauteur par rapport au dispositif de ramassage (9).

10. Récolteuse selon l'une quelconqque des revendications précédentes, **caractérisée en ce que** le dispositif de ramassage (9) comporte au moins un cylindre d'effanage de tubercules (45) disposé en amont dans son sens de déplacement (27) et **en ce que** celui-ci peut être replié vers le haut depuis sa position de fonctionnement et rabattu vers l'arrière à l'encontre du sens de déplacement (27), dans une position de transport au-dessus du dispositif de ramassage (9).

11. Récolteuse selon l'une quelconque des revendications 1 à 10, **caractérisée en ce que** la trémie de collecte (15) présente des parois latérales rigides (55, 56) capables de basculer depuis une position de transport substantiellement verticale, dont les côtés des bords latéraux sont reliés par des éléments intermédiaires flexibles de parois (57, 58, 59, 60) aux côtés des bords des parois rigides de la trémie contiguës opposées à ceux-ci dans la position de transport.

12. Récolteuse selon la revendication 11, **caractérisée en ce que** les éléments intermédiaires flexibles (57, 58, 59, 60) sont formés de toiles.

13. Récolteuse selon la revendication 11, **caractérisée en ce que** les éléments intermédiaires flexibles (57, 58, 59, 60) sont formés de feuilles en caoutchouc ou en matière synthétique.

14. Récolteuse selon l'une quelconque des revendications 11 à 13, **caractérisée en ce que** les éléments intermédiaires flexibles de parois (57, 58, 59, 60) sont pourvus d'armatures.

15. Récolteuse selon la revendication 11, **caractérisée en ce que** les côtés des bords supérieurs (61, 62, 63, 64) des parois intermédiaires flexibles (57, 58, 59, 60) sont renforcés par des câbles, chaînes ou rubans de traction.

16. Récolteuse selon l'une quelconque des revendications 11 à 15, **caractérisée en ce que** la paroi latérale rigide (56) de la trémie de collecte (15), tournée en position de récolte vers la zone de champ récoltée, est conformée en tant que convoyeur de déchargement.

17. Récolteuse selon l'une quelconque des revendications 11 à 16, **caractérisée en ce que** le convoyeur de déchargement présente deux éléments de rallonge (67, 68) raccordés de façon articulée à sa partie de convoyeur (56) formant la paroi latérale capable de basculer de la trémie de collecte (15), lesquels éléments peuvent être rabattus en position de transport du convoyeur de déchargement (56, 67, 68) dans une position de repos située à l'intérieur du contour de la trémie de collecte (15).

18. Récolteuse selon la revendication 17, **caractérisée en ce que** l'élément de rallonge (68) situé le plus à l'extérieur est conformé en tant que convoyeur de longueur variable.

19. Récolteuse selon l'une quelconque des revendications 1 à 18, **caractérisée en ce que** le convoyeur vertical (13) présente une partie terminale (72) repliable du côté arrière de la trémie de collecte (15), laquelle peut être dépliée depuis une position de repos horizontale dirigée vers le côté arrière de la récolteuse dans une position de fonctionnement, dans laquelle elle s'étend au-dessus de l'ouverture de la trémie (15).

20. Récolteuse selon la revendication 19, **caractérisée en ce qu'**un convoyeur auxiliaire (75) est associé au compartiment de convoyage du convoyeur vertical (13), lequel convoyeur auxiliaire (75) forme un canal de convoyage (77) avec le compartiment de convoyage du convoyeur vertical (13).

21. Récolteuse selon la revendication 20, **caractérisée en ce que** le compartiment de convoyage du convoyeur auxiliaire (75) présente dans sa zone supérieure une partie terminale (76) pivotante qui s'étend au-dessus de l'ouverture de la trémie de collecte (15), laquelle partie terminale (76) forme une partie de canal orientable avec le compartiment de convoyage de la partie terminale (72) du convoyeur vertical (13) se trouvant en position de fonctionnement.

22. Récolteuse selon l'une quelconque des revendications 1 à 21, **caractérisée en ce que** la partie de train arrière est formée par une roue double (2) capable de pivoter autour d'un arbre médian vertical (3) en vue de diriger la récolteuse.
